# EUROPÄISCHE PATENTSCHRIFT

(11) **EP 2 798 165 B1**
(45) Veröffentlichungstag und Bekanntmachung des Hinweises auf die Patenterteilung: **23.09.2020**
(21) Anmeldenummer: 12809813.4
(22) Anmeldetag: 20.12.2012
(51) Int. Cl.: F01L 3/20, B21K 1/22, F16K 1/38

(54) **DESIGN EINES VENTIL-SCHLIEßKÖRPERS**
DESIGN OF A VALVE CLOSING BODY
CONFIGURATION D'OBTURATEUR DE SOUPAPE

(30) Priorität: 30.12.2011 DE 102011090203
(43) Veröffentlichungstag der Anmeldung: 05.11.2014
(73) Patentinhaber: Vitesco Technologies GmbH, 30165 Hannover (DE)
(72) Erfinder: GARTERNICHT, Ferdinand, 93055 Regensburg (DE)
(74) Vertreter: Wohnert, Dietmar
(86) Internationale Anmeldenummer: PCT/EP2012/076346
(87) Internationale Veröffentlichungsnummer: WO 2013/098183

(56) Entgegenhaltungen:
- WO-A1-03/050395
- DE-A1- 2 227 915
- DE-A1- 4 435 443
- DE-A1- 19 710 295
- FR-A- 560 095
- GB-A- 191 312 662
- US-A- 1 512 732
- US-A- 1 881 259

## Beschreibung

Die Erfindung betrifft einen Ventil-Schließkörper mit einem Ventil-Schließkörperkopf, der von wenigstens zwei Segmenten wenigstens eines geometrischen Körpers gebildet wird. Die Erfindung betrifft ebenfalls einen Ventilkörpersitz, der nach dem gleichen Prinzip wie der Ventil-Schließkörperkopf aufgebaut ist.

Im Stand der Technik sind Ventil-Schließkörper bekannt, die aus einem Kugelsegment gebildet sind, wobei der Mittelpunkt der Kugel auf der Längsachse durch den Ventil-Schließkörper liegt. Desweiteren sind Ventil-Schließkörper mit einem Doppelkegel-Design bekannt, wobei der Übergang vom ersten Kegel zum zweiten Kegel durch eine umlaufende Kante gebildet wird.

FR 560 095 A offenbart einen Ventilschließkörper mit einer Lagerstelle zum Verbinden des Ventilschließkörpers mit einem Antrieb, und mit einem Ventilschließkörperschaft sowie mit einem Ventilschließkörperkopf, der eine dem Ventilschließkörperschaft zugewandte Oberseite und eine Unterseite aufweist. Der Ventilschließkörperkopf ist wenigstens durch zwei Segmente eines geometrischen Körpers gebildet.

In DE 44 35 443 A1 ist ein Ventil beschrieben, dessen Ventilschaft hohl ist und Ventilöffnungen aufweist, wobei Luft und Kraftstoff durch den hohlen Schaft geführt werden. Das Ventil ist allseitig von einer Führung abgedichtet. Die Ventilöffnungen sind in einem geschlossenen oder geringfügig geöffneten Zustand des Ventils innerhalb der Führung angeordnet, und sind in einem maximal geöffneten Zustand des Ventils außerhalb der Führung angeordnet.

DE 197 10 295 A1 betrifft einen Stößel einer Vorrichtung zum Drosseln einer fluiden Strömung, insbesondere einer Stoffsuspensionsströmung, wobei der Stößel im Bereich seiner fluiden Umströmung zumindest teilweise Querschnitte aufweist, deren Ebene senkrecht zur Längsachse des Stößels liegt, wobei diese über keine oder eine begrenzte Anzahl an Symmetrieachsen verfügen.

DE 22 27 915 A1 betrifft ein Verfahren zur Heißausformung von hohlen pilzförmigen Metallteilen mit einem Hutbereich, deren äußerer Durchmesser wesentlich größer ist als der eines Rohrrohlings, unter Verwendung eines Rohres von dünner Wandstärke, dessen Format dem eines hohlen Schaftes des Endproduktes entspricht, so dass die Bearbeitung des hohlen Schaftes weitgehend entfallen kann. Genauer gesagt, betrifft sie ein Verfahren zur Heißausformung von hohlen Ventilen für Motoren oder von Teilen, die einen hutförmigen Bereich und einen hohlen Schaft haben, wobei der Außendurchmesser des Hutbereiches mehr als zwei- oder dreimal so groß sein kann wie der des Schaftbereiches, durch Verwendung eines Rohres von dünner Wandstärke, dessen Verhältnis zwischen seinem Außendurchmesser und seiner Wandstärke mehr als 3,5 beträgt.

WO 03/050395 A1 offenbart ein gebautes Ventil für Hubkolbenmaschinen, bei dem der Ventilteller zug- und druckfest mit dem Ventilschaft verbunden ist. Der Ventilteller weist im Bereich einer durchgehenden Mittenöffnung eine ringförmige Anlagefläche für einen schaftseitigen Bund auf. Außerdem erweitert sich die Mittenöffnung auf der Brennraumseite des Ventiltellers, wobei das tellerseitige Ende des Ventilschaftes in einer diese Erweiterung formschlüssig ausfüllenden Weise plastisch aufgeweitet ist. Um die Verbindung zwischen Ventilteller und Ventilschaft in ihrer Dauerhaltbarkeit zu erhöhen, ist die brennraumseitige Erweiterung der Mittenöffnung und demgemäß auch die formangepasste, endseitige Aufweitung des Ventilschaftes erfindungsgemäß unrund ausgebildet, so dass dadurch eine formschlüssige Verdrehsicherung zwischen dem Ventilschaft und dem Ventilteller zustande kommt.

GB191312662 beschreibt ein Ventil für Brennkraftmaschinen, das eine Dichtfläche an einem austauschbaren Gusseisenring aufweist, der über eine Mutter an einem Ventilschaft befestigt ist.

US1881259 und US1512732 offenbaren jeweils einen Ventil-Schließkörper, welcher durch Segmente einer Kugel gebildet ist. Z

Es ist eine Aufgabe der Erfindung einen Ventil-Schließkörper mit einem verbesserten Schließverhalten und einer erhöhten Robustheit zur Verfügung zu stellen.

Diese Aufgabe wird erfindungsgemäß durch den Ventil-Schließkörper gemäß Anspruch 1 und den Ventilkörpersitz nach Anspruch 10 erfüllt. Die Erfindung betrifft zunächst einen Ventil-Schließkörper, der eine Lagerstelle aufweist, mit der er mit einem vorzugsweise geregelten oder gesteuerten Abtrieb zum Öffnen und Schließen des Ventils verbunden werden kann. Anschließend an die Lagerstelle weist der Ventil-Schließkörper einen Ventil-Schließkörperschaft auf und daran anschließend einen Ventil-Schließkörperkopf. Der Ventil-Schließkörperkopf hat eine Oberseite, die dem Ventil-Schließkörperschaft zugewandt ist und eine Unterseite. Der Ventil-Schließkörperkopf wird erfindungsgemäß durch wenigstens zwei Segmente wenigstens eines geometrischen Körpers gebildet. Bei dem geometrischen Körper handelt es sich um eine Kugel.

Die Kugel weist einen Mittelpunkt auf, der zu einer Mittellängsachse des Ventil-Schließkörperschafts exzentrisch angeordnet ist, so dass ein Schnitt durch die Kugel in einer Ebene der Mittellängsachse die Kugel in ein erstes Kugelsegment und in ein zweites Kugelsegment teilt. Dabei ist eines der Kugelsegmente größer als eine Halbkugel, das andere Kugelsegment kleiner als eine Halbkugel.

Zum Formen des Ventil-Schließkörperkopfs wird das kleinere Kugelsegment bezüglich der Ebene durch die Mittellängsachse des Ventil-Schließkörperschafts gespiegelt, so dass ein geometrischer Körper gebildet wird, der aus zwei zweiten Kugelsegmenten besteht. Mit anderen Worten wird aus der Mitte der Kugel eine Scheibe herausgeschnitten, mit einer Dicke die der doppelten Exzentrizität der Kugel zur Mittellängslinie des Ventil-Schließkörperschafts entspricht, wobei die Mittelebene der Scheibe den Kugelmittelpunkt umfasst. Die beiden Kugelsegmente werden dann mit ihren Schnittseiten aneinandergelegt, so dass die Schnittstellen sich in einer Ebene, die durch die Mittellängslinie des Ventil-Schließkörperschafts aufgespannt wird, berühren. Ein Teil dieses so entstandenen geometrischen Körpers wird anschließend bearbeitet bzw. mit einem Designprogramm geformt, so dass ein Körper unterhalb des Ventil-Schließkörperschafts mit einem in jeder Ebene der Hochachse bevorzugt kreisrunden Umfang entsteht. Dazu kann der geometrische Körper zum Beispiel um seine Längsachse rotiert werden, was zu einem Körper führt, der aus lauter kreisrunden Scheiben besteht. Dieser Körper bildet dann den Ventil-Schließkörperkopf.

Bevorzugt ist der Ventil-Schließkörper einstückig gebildet. Als Materialien kommen alle geeigneten Materialien in Frage, zum Beispiel Metall, Keramik oder Kunststoff. Die Herstellung kann beispielsweise im Druckguss- oder Sinterverfahren erfolgen, bevorzugt wird der Ventil-Schließkörper in einem spanabhebenden Verfahren, wie Drehen, Fräsen und/oder Schleifen hergestellt. Der Ventil-Schließkörper kann wenigstens an der Oberfläche des Ventil-Schließkörperkopfs eine Beschichtung aufweisen, die einem schnellen Verschleiß der Oberfläche durch die im Ventil herrschenden physikalischen Bedingungen entgegenwirkt. Die Beschichtung kann zum Beispiel aus einem Lack, einem Metall, einem Metallaufbau aus mehreren Metallschichten oder einer Keramik bestehen und widerstandsfähiger u.a. gegen Abrieb, hohe Temperaturen oder chemische Zersetzung sein, als das Kernmaterial des Ventil-Schließkörpers. Statt oder zusätzlich zu der Beschichtung kann der Ventil-Schließkörper auch einem Aushärtungsprozess unterzogen werden, der das Material durchhärtet oder zumindest an der Oberfläche aushärtet und so die Eigenschaften der Materialoberfläche verändert. Schließlich können die Eigenschaften des Ventil-Schließkörperkopfs auch durch Kolsterisieren verbessert werden.

Die Form des erfindungsgemäßen Ventil-Schließkörperkopfs ist auch dazu geeignet, eine bessere Spannungsverteilung im Bereich des Dichtungskreises zwischen dem Ventilsitz und dem Ventil-Schließkörperkopf zu erzielen.

Der Ventil-Schließkörperkopf weist einen ersten Bereich auf, der die Oberseite bildet, und einen daran anschließenden zweiten Bereich, der zum Beispiel kreisscheibenförmig ausgebildet sein kann, mit gerader oder schräger umlaufender Außenseite. Der Übergang von der Oberfläche in den zweiten Bereich kann durch einen Radius erfolgen, der je nach Anwendungsfall ausgebildet sein kann. Der zweite Bereich kann an seiner vom ersten Bereich wegweisender Seite halbkreisförmig, kegelförmig oder beliebig geformt ausgebildet sein, um die Strömungsverhältnisse in diesem Bereich zu optimieren und möglicher Kavitation in diesem Bereich vorzubeugen oder die Korrosion durch die Kavitation zumindest zu verbessern.

Ein maximaler Dichtungskreisdurchmesser des Ventil-Schließkörpers entspricht bevorzugt dem maximalen Durchmesser der Oberfläche des Ventil-Schließkörperkopfs senkrecht zur Mittellängsachse des Ventil-Schließkörperschafts.

Die Erfindung betrifft weiterhin einen Ventilsitz für einen konventionellen Ventil-Schließkörper, der vom Prinzip her entsprechend der Beschreibung zum erfindungsgemäßen Ventil-Schließkörperkopf ausgebildet ist.

Der Ventilsitz ist durch zwei Segmente eines geometrischen Körpers gebildet. Der geometrische Körper ist eine Kugel, deren Mittelpunkt zu einer Mittellängsachse des Ventilsitzes versetzt angeordnet ist, und die dadurch bezüglich einer Schnittachse durch die Mittellängsachse des Ventilsitzes ein erstes Kugelsegment und ein zweites Kugelsegment bildet, wobei das erste Kugelsegment und das zweite Kugelsegment nicht gleich groß sind. Das zweite Kugelsegment wird bezüglich der Mittellängsachse des Ventilsitzes gespiegelt, und der Ventilsitz wird durch einen Teil des zweiten Kugelsegments und einen Teil des gespiegelten zweiten Kugelsegments gebildet.

Durch eine derartige Ausbildung des erfindungsgemäßen Ventilsitzes können in der Zusammenwirkung des Ventilsitzes mit einem herkömmlichen Ventil-Schließkörper die gleichen Vorteile erzielt werden, wie beim Zusammenwirken des erfindungsgemäßen Ventil-Schließkörper mit einem herkömmlichen Ventilsitz. Der Fachmann weiß aufgrund der Beschreibung des Ventil-Schließkörperkopfs, wie er den Ventilsitz ausbilden muss, um im Zusammenwirken von Ventilsitz und Ventil-Schließkörper die beschriebenen Vorteile zu erreichen.

Im Folgenden werden zwei Ausführungsformen anhand von Figuren näher erläutert. Merkmale, die alleine den Figuren entnommen werden können gehören ebenso zum Umfang der Erfindung und können einzeln oder in der gezeigten Kombination den Gegenstand der Erfindung vorteilhaft weiterbilden. Die Erfindung ist nicht auf die in den Figuren dargestellten Ausführungsformen beschränkt.

Die Figuren zeigen im Einzelnen:
Figur 1: Ventil-Schließkörper einer ersten Ausführung
Figur 2: Ventil-Schließkörper einer zweiten, nicht erfindungsgemäßen Ausführung

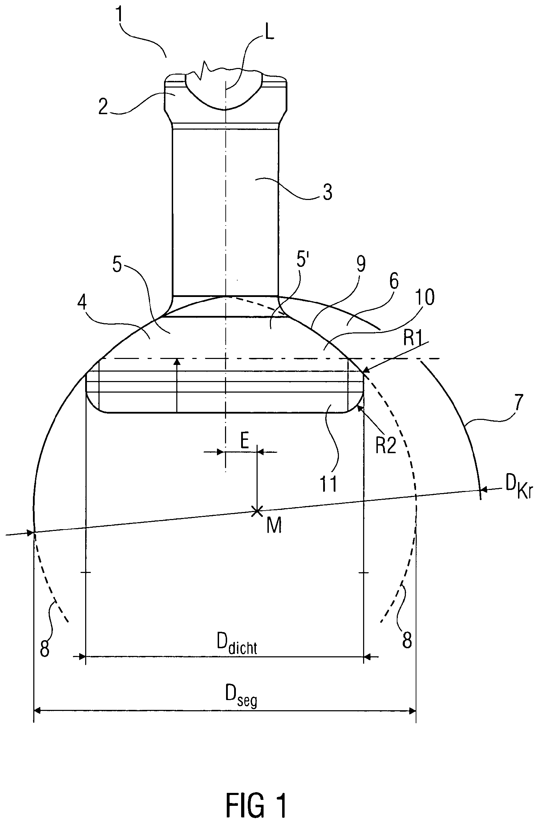

Figur 1 zeigt einen Ventil-Schließkörper 1 mit einer Lagerung 2, einem Ventil-Schließkörperschaft 3 und einem Ventil-Schließkörperkopf 4.

Der Ventil-Schließkörperkopf 4 ist aus zwei Kreissegmenten 5, 6 gebildet, die Kreissegmente 5, 6 sind Teile des Kreises 7. Der Kreis 7 weist einen Durchmesser D_{Kr} auf und hat einen Mittelpunkt M der versetzt zur Mittellängsachse L des Ventil-Schließkörperschafts 3 angeordnet ist. Die Exzentrizität E des Kreismittelpunkts M zur Mittellängsachse L kann für jeden Ventil-Schließkörper 1 individuell bestimmt werden.

Die Figur 1 zeigt, dass die Kugel 7, die durch den Kreis 7 dargestellt ist, aufgrund der Exzentrizität E in zwei Kreissegmente 5, 6 geteilt wird, wobei die Kreissegmente 5, 6 die durch die Teilung der Kugel in einer Ebene die die Mittellängslinie L enthält entstehen, für zwei unterschiedlich große Kugelsegmente 5, 6 stehen.

Um den Ventil-Schließkörperkopf 4 zu bilden, wird das Kugelsegment 5 bezüglich der Mittellängslinie L gespiegelt und das Kugelsegment 5 und das gespiegelte Kugelsegment 5' werden an ihren Schnittseiten aneinander gelegt. Dadurch entsteht der durch die gestrichelten Linien gekennzeichnete Körper 8. Dieser Körper 8 ist unterhalb des Ventil-Schließkörperschafts so gebildet, dass er in jeder Ebene senkrecht zur Mittellängsachse L eine kreisrunde Form hat, mit einem maximalen Durchmesser D_{seg}.

Jeweils ein Teil der Kreissegmente 5 und 5' bilden jetzt gemeinsam den Ventil-Schließkörperkopf 4 mit einem Dichtkreisdurchmesser D_{dicht}. Der Ventil-Schließkörperkopf 4 weist eine dem Ventil-Schließkörperschaft 3 zugewandte Oberfläche 9 auf, die beschichtet oder behandelt sein kann, um die Lebensdauer des Ventil-Schließkörperkopfs 4 zu verlängern.

Der Dichtkreisdurchmesser D_{didht} wird durch die Exzentrizität E, sowie die Angaben zum Kreis 7 festgelegt. Die Festlegung des Abstands der Oberfläche 9 zu einer Innenseite eines nicht gezeigten Ventilsitzes im dämpfungsrelevanten Bereich des Ventils wird durch die Angaben zum Kreis 7 bestimmt.

Der Ventil-Schließkörperkopf 4 besteht aus einem ersten Bereich 10, der die Oberfläche 9 bildet und einem sich daran anschließenden Bereich 11. Den Übergang zwischen den Bereichen 10, 11 bildet eine Rundung mit einem Radius R1. An seinem der Oberseite 9 angewandten Ende ist der zweite Abschnitt 11 mit einem Radius R2 abgerundet. Diese Ende muss nicht, wie im Ausführungsbeispiel gezeigt, abgeflacht sein, sondern kann beispielsweise kegelförmig oder insgesamt verrundet sein.

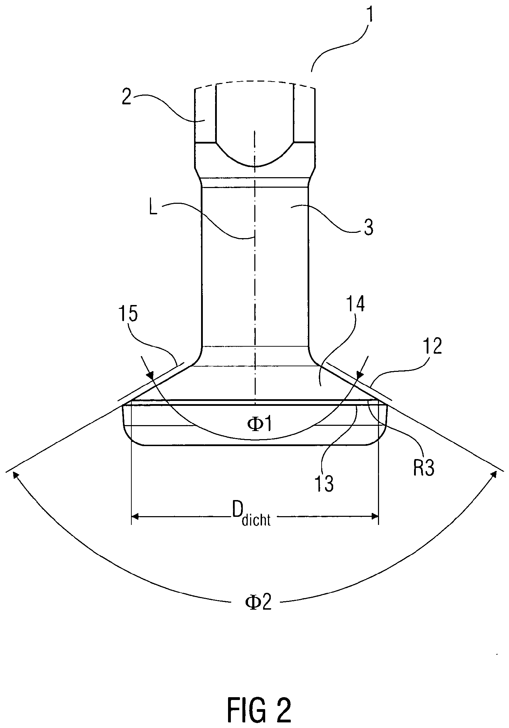

Die Figur 2 zeigt eine zweite, nicht zur Erfindung gehörende Ausführung. Identische Teile zur Figur 1 werden mit den gleichen Bezugszeichen bezeichnet. Der Unterschied zwischen den beiden Figuren liegt in der Ausbildung des Ventil-Schließkörperkopfs 4.

Der Ventil-Schließkörperkopf 4 des Ventil-Schließkörpers 1 der Figur 2 wird durch zwei Kegelstümpfe 13, 14 gebildet, die entlang der Mittellängsachse L hintereinander angeordnet sind. Der erste Kegelstumpf 14 weist dabei einen Kegelwinkel von Φ1 auf, der zweite Kegelstumpf einen Kegelwinkel Φ2. Dabei gilt im vorliegenden Beispiel Φ1 > Φ2.

Den Übergang zwischen den beiden Kegelstümpfen 13, 14 bildet eine Kante 12 mit dem Radius R3 im Schnittpunkt der Kegelstümpfe 13, 14.

Die Kegelstümpfe 13, 14 haben in jeder Ebene senkrecht zur Mittellängsachse L eine kreisrunde Außenkontur, die Mittelachsen der Kegelstümpfe 13, 14 liegen auf einer Linie mit der Mittellängsachse L des Ventil-Schließkörperschafts 3.

Der Ventil-Schließkörperkopf 3 in Fig. 2 weist eine Oberfläche 9 auf und eine die Oberfläche bedeckende optionale Beschichtung 15 auf. Der Dichtkreisdurchmesser D_{dicht} wird durch den Radius R3 im Schnittpunkt der beiden Kegelstümpfe 13, 14 festgelegt. Die Festlegung des Abstands der Oberfläche 9 zu einer Innenseite eines nicht gezeigten Ventilsitzes im dämpfungsrelevanten Bereich des Ventils wird durch die Winkel Φ1, Φ2 der beiden Kegelstümpfe 13, 14 sowie der Form und Lage relativ zu einer Ventilmittelllängsachse bestimmt.

## Patentansprüche

1. Ventil-Schließkörper, mit
einer Lagerstelle (2) zum Verbinden des Ventil-Schließkörpers (1) mit einem Antrieb,
einem Ventil-Schließkörperschaft (3)
und einem Ventil-Schließkörperkopf (4) mit einer dem Ventil-Schließkörperschaft (3) zugewandten Oberseite (9), die einen Dichtkreis (D_{dicht}) des Ventil-Schließkörpers (1) bildet und einer Unterseite,
wobei der Ventil-Schließkörperkopf (4) durch zwei Segmente (4, 5; 13, 14) eines geometrischen Körpers gebildet ist,
wobei der geometrische Körper eine Kugel (7) ist, **dadurch gekennzeichnet dass** deren Mittelpunkt (M) zu einer Mittellängsachse (L) des Ventil-Schließkörperschafts (3) versetzt angeordnet ist und die dadurch bezüglich einer Schnittachse durch die Mittellängsachse (L) des Ventil-Schließkörperschafts (3) ein erstes Kugelsegment (6) und ein zweites Kugelsegment (5) bildet, wobei das erste Kugelsegment (6) und das zweite Kugelsegment (5) nicht gleich groß sind, wobei das erste Kugelsegment (6) größer als eine Halbkugel und das zweite Kugelsegment (5) kleiner als eine Halbkugel ist,
wobei das zweite Kugelsegment (5) bezüglich der Mittellängsachse (L) des Ventil-Schließkörperschafts (3) gespiegelt wird und der Ventil-Schließkörperkopf (4) durch einen Teil des zweiten Kugelsegments (5) und einen Teil des gespiegelten zweiten Kugelsegments (5') gebildet wird, wobei ein Teil dieses so entstandenen geometrischen Körpers so bearbeitet bzw. geformt wird, dass ein Körper unterhalb des Ventil-Schließkörperschafts (3) mit einem in jeder Ebene der Mittellängsachse (L) kreisrunden Umfang entsteht.

2. Ventilschließkörper nach Anspruch 1, wobei der Ventilschließkörper einstückig gebildet ist.

3. Ventilschließkörper nach einem der Ansprüche 1 oder 2, wobei der Ventil-Schließkörper (1) aus Metall, Keramik oder Kunststoff gebildet ist.

4. Ventilschließkörper nach einem der vorgehenden Ansprüche, wobei der Ventil-Schließkörper (1) in einem Druckguss-, Sinter- oder spanabhebenden Verfahren hergestellt ist.

5. Ventilschließkörper nach einem der vorgehenden Ansprüche, wobei wenigstens die Oberseite (9) des Ventil-Schließkörperkopfs (4) eine Beschichtung (15) aufweist.

6. Ventilschließkörper nach einem der vorgehenden Ansprüche, wobei der Ventil-Schließkörperkopf (4) einen ersten Abschnitt (10) aufweist, der die Oberseite (9) bildet, und einen daran anschließenden zweiten Abschnitt (11).

7. Ventilschließkörper nach dem vorgehenden Anspruch, wobei der erste Abschnitt (10) in einem definierten Radius (R1) in den zweiten Abschnitt (11) übergeht.

8. Ventilschließkörper nach Anspruch 6, wobei ein maximaler Dichtungskreisdurchmesser (D_{dicht}) des Ventil-Schließkörperkopfs dem maximalen Durchmesser des ersten Abschnitts (10) entspricht.

9. Ventilsitz eines Ventils, der zum Zusammenwirken mit einem Ventil-Schließkörperkopf nach einem der Ansprüche 1 bis 8 ausgebildet ist, wobei der Ventilsitz durch zwei Segmente eines geometrischen Körpers gebildet ist,
**dadurch gekennzeichnet, dass** der geometrische Körper eine Kugel ist, deren Mittelpunkt zu einer Mittellängsachse des Ventilsitzes versetzt angeordnet ist und die dadurch bezüglich einer Schnittachse durch die Mittellängsachse des Ventilsitzes ein erstes Kugelsegment und ein zweites Kugelsegment bildet, wobei das erste Kugelsegment und das zweite Kugelsegment nicht gleich groß sind, wobei das erste Kugelsegment (6) größer als eine Halbkugel und das zweite Kugelsegment (5) kleiner als eine Halbkugel ist,
wobei das zweite Kugelsegment bezüglich der Mittellängsachse des Ventilsitzes gespiegelt wird und der Ventilsitz durch einen Teil des zweiten Kugelsegments und einen Teil des gespiegelten zweiten Kugelsegments gebildet wird, wobei ein Teil dieses so entstandenen geometrischen Körpers so bearbeitet bzw. geformt wird, dass ein Körper unterhalb des Ventil-Schließkörperschafts (3) mit einem in jeder Ebene der Mittellängsachse (L) kreisrunden Umfang entsteht.

## Claims

1. Valve closing element, comprising
a bearing point (2) for connecting the valve closing element (1) to a drive,
a valve closing element shaft (3),
and a valve closing element head (4) having an upper surface (9) and a lower surface, said upper surface facing the valve closing element shaft (3) and forming a sealing circle (D_{dicht}) of the valve closing element (1),
the valve closing element head (4) being formed by two segments (4, 5; 13, 14) of a geometric body,
the geometric body being a sphere (7), **characterized in that**
the center (M) of said sphere is located offset from a center longitudinal axis (L) of the valve closing element shaft (3), and said sphere thus forms a first sphere segment (6) and a second sphere segment (5) in relation to a sectional axis through the center longitudinal axis (L) of the valve closing element shaft (3), the first sphere segment (6) and the second sphere segment (5) not being equal in size, the first sphere segment (6) being larger than a hemisphere, and the second sphere segment (5) being smaller than a hemisphere,
the second sphere segment (5) being mirrored in relation to the center longitudinal axis (L) of the valve closing element shaft (3), the valve closing element head (4) being formed by part of the second sphere segment (5) and part of the mirrored second sphere segment (5'), part of the resultant geometric body being processed or shaped such that below the valve closing element shaft (3), a body is formed having a periphery that is circular in every plane of the center longitudinal axis (L).

2. The valve closing element according to Claim 1, wherein the valve closing element is formed in one piece.

3. The valve closing element according to Claim 1 or 2, wherein the valve closing element (1) is formed of metal, ceramic or plastics material.

4. The valve closing element according to any of the preceding Claims, wherein the valve closing element (1) is manufactured in a die-casting, sintering or machining method.

5. The valve closing element according to any of the preceding Claims, wherein at least the upper surface (9) of the valve closing element head (4) has a coating (15).

6. The valve closing element according to any of the preceding Claims, wherein the valve closing element head (4) has a first portion (10) forming the upper surface (9), and an adjoining second portion (11).

7. The valve closing element according to the preceding Claim, wherein the first portion (10) transitions into the second portion (11) at a defined radius (R1).

8. The valve closing element according to Claim 6, wherein a maximum seal circle diameter (D_{dicht}) of the valve closing element head corresponds to the maximum diameter of the first portion (10).

9. A valve seat of a valve, said valve seat being designed to interact with a valve closing element head according to any of Claims 1 to 8, the valve seat being formed by two segments of a geometric body,
**characterized in that** the geometric body is a sphere, the center of said sphere being located offset from a center longitudinal axis of the valve seat, said sphere thus forming a first sphere segment and a second sphere segment in relation to a sectional axis through the center longitudinal axis of the valve seat, the first sphere segment and the second sphere segment not being equal in size, the first sphere segment (6) being larger than a hemisphere, and the second sphere segment (5) being smaller than a hemisphere,
the second sphere segment being mirrored in relation to the center longitudinal axis of the valve seat, the valve seat being formed by part of the second sphere segment and part of the mirrored second sphere segment, part of the resultant geometric body being processed or shaped such that below the valve closing element shaft (3), a body is formed having a periphery that is circular in every plane of the center longitudinal axis (L).

## Revendications

1. Obturateur de soupape, avec
un point d'appui (2) pour la liaison de l'obturateur de soupape (1) avec un entraînement,
une tige d'obturateur de soupape (3)
et une tête d'obturateur de soupape (4) avec un côté supérieur (9) tourné vers la tige d'obturateur de soupape (3), lequel côté forme un cercle d'étanchéité (D_{dicht}) de l'obturateur de soupape (1), et un côté inférieur,
la tête d'obturateur de soupape (4) étant formée par deux segments (4, 5 ; 13, 14) d'un corps géométrique,
le corps géométrique étant une sphère (7), **caractérisée en ce que**
le centre (M) de celle-ci est disposé de façon décalée par rapport à un axe longitudinal central (L) de la tige d'obturateur de soupape (3), et laquelle forme de ce fait un premier segment sphérique (6) et un deuxième segment sphérique (5) relativement à un axe de coupe par l'axe longitudinal central (L), le premier segment sphérique (6) et le deuxième segment sphérique (5) n'étant pas de même taille, le premier segment sphérique (6) étant plus grand qu'une demi-sphère et le deuxième segment sphérique (5) étant plus petit qu'une demi-sphère,
le deuxième segment sphérique (5) étant réfléchi par rapport à l'axe longitudinal central (L) de la tige d'obturateur de soupape (3) et la tête d'obturateur de soupape (4) étant formée par une partie du deuxième segment sphérique (5) et par une partie du deuxième segment sphérique réfléchi (5'), une partie du corps géométrique créé ainsi étant traitée ou formée de telle sorte qu'un corps est créé sous la tige d'obturateur de soupape (3) avec un périmètre circulaire dans chaque plan de l'axe longitudinal central (L).

2. Obturateur de soupape selon la revendication 1, l'obturateur de soupape étant formé d'une seule pièce.

3. Obturateur de soupape selon l'une des revendications 1 ou 2, l'obturateur de soupape (1) étant formé en métal, en céramique ou en plastique.

4. Obturateur de soupape selon l'une des revendications précédentes, l'obturateur de soupape (1) étant fabriqué avec un procédé de moulage sous pression, un procédé de frittage ou un procédé par enlèvement de copeaux.

5. Obturateur de soupape selon l'une des revendications précédentes, au moins le côté supérieur (9) de la tête d'obturateur de soupape (4) présentant un revêtement (15).

6. Obturateur de soupape selon l'une des revendications précédentes, au moins la tête d'obturateur de soupape (4) présentant un premier tronçon (10), lequel forme le côté supérieur (9), et un deuxième tronçon (11) y étant adjacent.

7. Obturateur de soupape selon l'une des revendications précédentes, le premier tronçon (10) passant au deuxième tronçon (11) dans un rayon défini (R1).

8. Obturateur de soupape selon la revendication 6, un diamètre de cercle d'étanchéité (D_{dicht}) maximal de la tête d'obturateur de soupape correspondant au diamètre maximal du premier tronçon (10).

9. Siège de soupape d'une soupape, étant formé pour l'interaction avec une tête d'obturateur de soupape selon l'une des revendications 1 à 8, le siège de soupape étant formé par deux segments d'un corps géométrique,
**caractérisé en ce que** le corps géométrique est une sphère, dont le centre est disposé de façon décalée par rapport à un axe longitudinal central du siège de soupape, et laquelle forme de ce fait un premier segment sphérique et un deuxième segment sphérique relativement à un axe de coupe par l'axe longitudinal central du siège de soupape, le premier segment sphérique et le deuxième segment sphérique n'étant pas de même taille, le premier segment sphérique (6) étant plus grand qu'une demi-sphère et le deuxième segment sphérique (5) étant plus petit qu'une demi-sphère,
le deuxième segment sphérique étant réfléchi par rapport à l'axe longitudinal central du siège de soupape et le siège de soupape étant formé par une partie du deuxième segment sphérique et par une partie du deuxième segment sphérique réfléchi, une partie du corps géométrique créé ainsi étant traitée ou formée de telle sorte qu'un corps est créé sous la tige d'obturateur de soupape (3) avec un périmètre circulaire dans chaque plan de l'axe longitudinal central (L).
